# EUROPEAN PATENT APPLICATION

(11) **EP 2 355 613 A1**
(43) Date of publication of application: **10.08.2011**
(21) Application number: 11153751.0
(22) Date of filing: 08.02.2011
(51) Int. Cl.: H04W 88/10, H04W 76/02

(54) **Method of processing a 2G call, device and computer program**

(30) Priority: 08.02.2010 ES 201030158
(71) Applicant: Vodafone Group PLC, Newbury Berkshire RG14 2FN (GB); Vodafone España, S.A.U., 28108 Alcobendas (ES)
(72) Inventor: Arranz Arauzo, Miguel, E-28050, Madrid (ES); Güemes Cabrejas, Inigo, E-28050, Madrid (ES); Valerdi Rodriguez, David, E-28050, Madrid (ES)
(74) Representative: Keston, David Arthur

(57) **Abstract**

A method of establishing, maintaining or releasing a call in a 3G mobile communications network (20), wherein at least one 2G terminal (21) participates in said call. The method comprises the steps of: at a network entity (23, 33), checking (502) whether an incoming signal from a mobile terminal (21, 22) is a 2G signal or not and, if said signal is a 2G signal: extracting (504) the user information from said signal and checking (505) whether its content is user payload or signalling information, and: if it is signalling information, checking (508) whether it is a channel request or a disconnection request, and: if it is a channel request, establishing (509) a 3G packet data protocol context and requesting (510) a radio access bearer for establishing a connection to a higher level network entity (25) and if it is a disconnection request, releasing (511) an open 3G packet data protocol context and requesting (512) the disconnection of a connection to a higher level network entity (25). If it is user payload instead of signalling information, encapsulating (506) said user payload in a frame of a call established on a radio access bearer and sending said frame to a higher level network entity (25). Network entity and computer program.

## Description

### FIELD OF THE INVENTION

The present invention relates to mobile or cellular telecommunications networks and in particular, to mobile or cellular telecommunications networks in which traffic of different technologies coexists.

### STATE OF THE ART

Current 2G and 3G telecommunications network operators will have soon new infrastructure to deploy, maintain and optimize: the 4G network, also called LTE (*Long Term Evolution*)*.* Operators will then have to face the cost of maintaining multiple RAN networks (*Radio Access Networks*) running in parallel.

When a sufficient amount of traffic has migrated from 2G to 3G, HSDPA and/or LTE, it may be more profitable for operators to switch off the 2G network. This traffic migration is supposed to be in most cases easily manageable, since most of the mobile terminals will be multistandard (2G/3G or 2G/3G/4G) by that time. As a consequence, none of the users having a multistandard mobile terminal will suffer from service cuts.

However, there is an increasing number of 2G users as a result of the success of machine-to-machine (M2M) applications. These M2M applications, which work over GPRS *(General Packet Radio Service*)(*2G*)*,* refer to data transmission from a remote location, such as parking meters, sensor, etc. (telemetry applications). This telemetry service is based on SIM (*Subscriber Identity Module*) cards located, for example, in parking meters. These telemetry terminals are not multistandard (they do not permit to change from 2G to 3G or vice versa in the event of, for example, loss of coverage). Although the traffic produced by this service is relatively small, the information it carries is critical. This critical information travels predominantly in the uplink channel. Due to the service they provide, telemetry terminals do normally not transmit in a continuous way, they are programmed to send data at a fixed moment of the day (for example, at night). The amount of data to be transmitted is usually small. As a consequence, these terminals need the service for short periods of time.

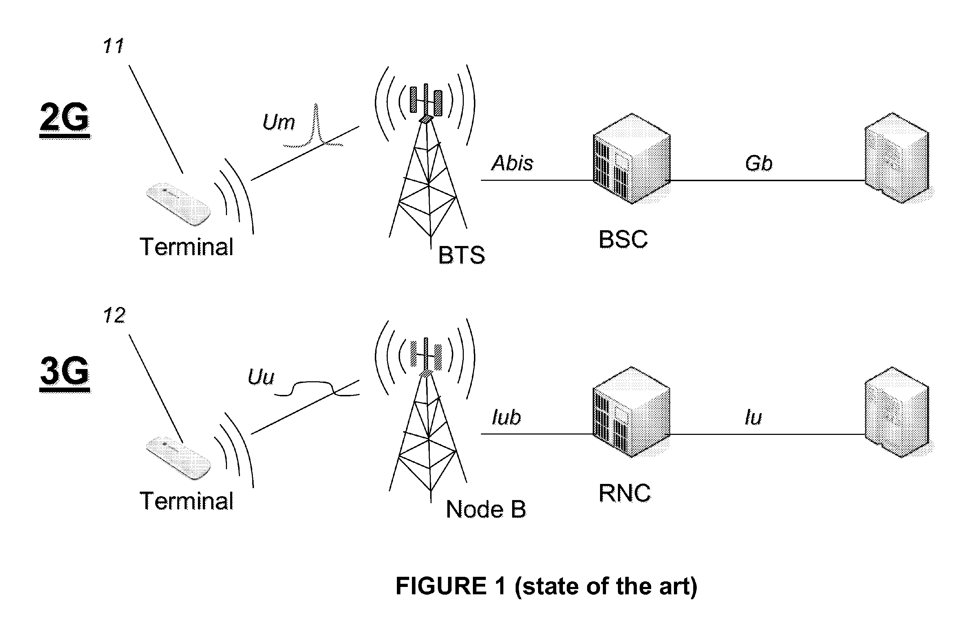

Figure 1 illustrates the current system architecture, wherein the 2G network and the 3G network coexist: A plurality of mobile terminals 11 use the 2G network, to which they connect through the Um interface (to a Base Transmission Station BTS). Examples of 2G mobile terminals 11 are mobile phones, which can be used for voice calls, and data terminals, such as modems, which can be used for data services, such as telemetry services). Figure 1 also shows one of a plurality of mobile terminals 12 which use the 3G network, to which they connect through the Uu interface (to a Node B) .

When the 2G network is switched off, the users (such as modems or other equipment) of this telemetry service will lose the service and therefore the capacity to transmit such critical information. Swapping all this equipment is very costly, because it is geographically dispersed and, sometimes, in locations of difficult access.

Current proposals on how to keep a thin 2G network are based on reducing capacity of 2G network entities to its minimum. However, this still keeps a large amount of 2G elements in the network, in order to keep coverage at its current level. Therefore, it is highly inefficient from a cost perspective (huge OPEX, HW modernization, etc.) point of view, taking into account that the involved traffic is marginal.

International patent application WO 2004/098224 A1 describes a method and device for controlling the transfer of a service request between a UMTS network and a GSM network. Although this method refers to 2G/3G interworking, it does not tackle the problem of what to do with current 2G applications, such as telemetry, when the 2G network is switched off. In fact, the method described therein needs equipment of both networks (2G and 3G).

Something similar is described in European patent EP 1257141 B1, which refers to the integration of different mobile telecommunications systems using different radio access technologies. Again, the method disclosed in this patent involves equipment of two different networks. Thus, the problems derived from switching off the 2G network are not considered.

Therefore, there is a need to enable current 3G and HSDPA infrastructure and future LTE infrastructure to cope with residual 2G traffic, when 2G networks are switched off.

### SUMMARY OF THE INVENTION

The present invention is intended to address the above mentioned need.

In a first aspect of the present invention there is provided a method of establishing, maintaining or releasing a call in a 3G mobile communications network, wherein at least one 2G terminal participates in the call. The method comprises the steps of: at a network entity, checking whether an incoming signal from a mobile terminal is a 2G signal or not and, if said signal is a 2G signal: extracting the user information from said signal and checking whether its content is user payload or signalling information, and: if it is signalling information, checking whether it is a channel request or a disconnection request, and: if it is a channel request, establishing a 3G packet data protocol context and requesting a radio access bearer for establishing a connection to a higher level network entity; if it is a disconnection request, releasing an open 3G packet data protocol context and requesting the disconnection of a connection to a higher level network entity; if it is user payload, encapsulating said user payload in a frame of a connection established on a radio access bearer and sending said frame to a higher level network entity.

Preferably, the mobile terminal is a 2G terminal and most preferably, a telemetry terminal. In a particular embodiment, the telemetry terminal works in the band of 900 MHz.

Preferably, the 2G signal is a GPRS signal.

The network entity is preferably a node B. Preferably, the higher level network entity is a SGSN.

If the signal is a 3G signal, it is processed at the node B.

In a further aspect of the present invention there is provided a network entity of a mobile communications network comprising means for carrying out the above-mentioned method.

Preferably, the network entity comprises: means for receiving and filtering an incoming signal, said incoming signal being either a narrow-band signal or a broad-band signal; means for processing 3G signals; and means for processing 2G signals.

Preferably, the means for processing 2G signals is implemented by means of software defined radio.

In a particular embodiment, the means for processing 2G signals comprises: means for emulating a 2G BTS; means for emulating a 2G BSC; means for converting 2G signals into 3G signals and vice versa.

Finally, the invention also refers to a computer program comprising computer program code means adapted to perform the steps of the above-mentioned method when said program is run on a computer, a digital signal processor, a field-programmable gate array, an application-specific integrated circuit, a micro-processor, a micro-controller, or any other form of programmable hardware.

As can be observed, the invention provides a method for emulating a 2G network, using equipment of another network which is working (3G or/and HSDPA or/and LTE). Thus, the 2G users keep on receiving their service through an emulated 2G network, instead of than through a physical 2G network. In other words, the invention provides a 2G network emulated over a 3G network or/and HSDPA network or/and LTE network by means of the technology called Software Defined Radio (SDR).

The advantages of the proposed invention will become apparent in the description that follows.

### BRIEF DESCRIPTION OF THE DRAWINGS

To complete the description and in order to provide for a better understanding of the invention, a set of drawings is provided. Said drawings form an integral part of the description and illustrate a preferred embodiment of the invention, which should not be interpreted as restricting the scope of the invention, but rather as an example of how the invention can be embodied. The drawings comprise the following figures:
Figure 1 shows a schematic representation of the current system architecture, wherein 2G networks and the 3G networks coexist.
Figure 2 shows a schematic representation of system architecture according to an embodiment of the present invention.
Figure 3 shows a block diagram of the modules of the network entity responsible for the implementation of the present invention.
Figure 4 shows a schematic representation of the protocol stack of the network entities involved in the present invention.
Figure 5 shows how 2G frames are converted to 3G frames and vice versa according to an embodiment of the invention.
Figure 6 shows a data flow of the method according to an embodiment of the invention.

### DESCRIPTION OF PREFERRED EMBODIMENTS OF THE INVENTION

In the context of the present invention, the term "call" refers to a packet-switched session or circuit-switched session over a radio bearer.

In the context of the present invention, the term "thin" is to be understood as meaning "limited" or "minimum". Thus, "thin 2G network capabilities" refers to minimum capabilities which allow establishing, maintaining and ending a 2G call, excluding any other capabilities not required to provide service to M2M static users, such as mobility management, voice quality management and collection of related counters.

In the context of the present invention, the term "emulation" is to be understood as the implementation of thin 2G network capabilities on a network element of a different technology (3G/HSDPA/LTE), so that a 2G end user sees that network element as if it was a 2G network element and can therefore establish a call and exchange signalling messages and user information transparently.

In this text, the term "comprises" and its derivations (such as "comprising", etc.) should not be understood in an excluding sense, that is, these terms should not be interpreted as excluding the possibility that what is described and defined may include further elements, steps, etc.

In the context of the present invention, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about" and "around".

The implementation of an exemplary embodiment of the present invention can be carried out as follows:

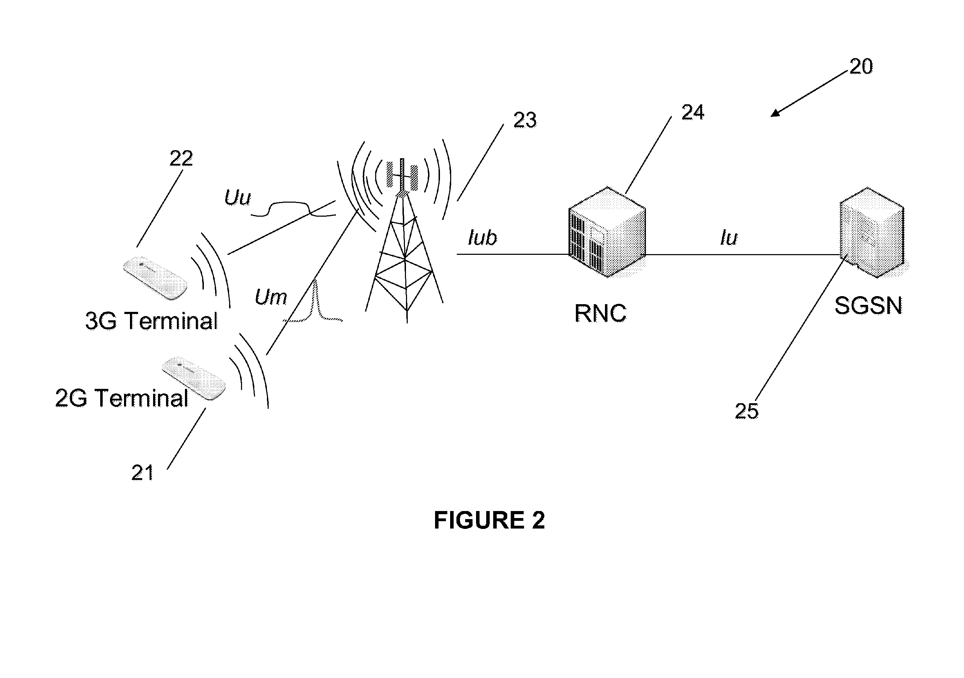

Figure 2 shows a schematic representation of the system architecture over which the method of the invention can be carried out. The network 20 is a 3G network, but it could be a HSDPA network or an LTE network instead. Figure 2 shows a scheme of the radio access network, which comprises a plurality of network entities, such as node B's, RNC's and SGSN's. In particular, figure 2 shows a node B 23 connected to a Radio Network Controller RNC 24 through the Iub interface, in turn connected to a Serving GPRS Support Node SGSN 25 through the Iu interface.

The node B 23 has thin 2G network capabilities, which enable the network 20 to act as a 2G network for the remaining 2G users (the 2G users which have not been migrated to 3G, HSDPA or LTE because their terminal 21 is not multistandard). These remaining 2G users are mainly telemetry users which use data calls. Those 2G network capabilities are emulated by the node B 23.

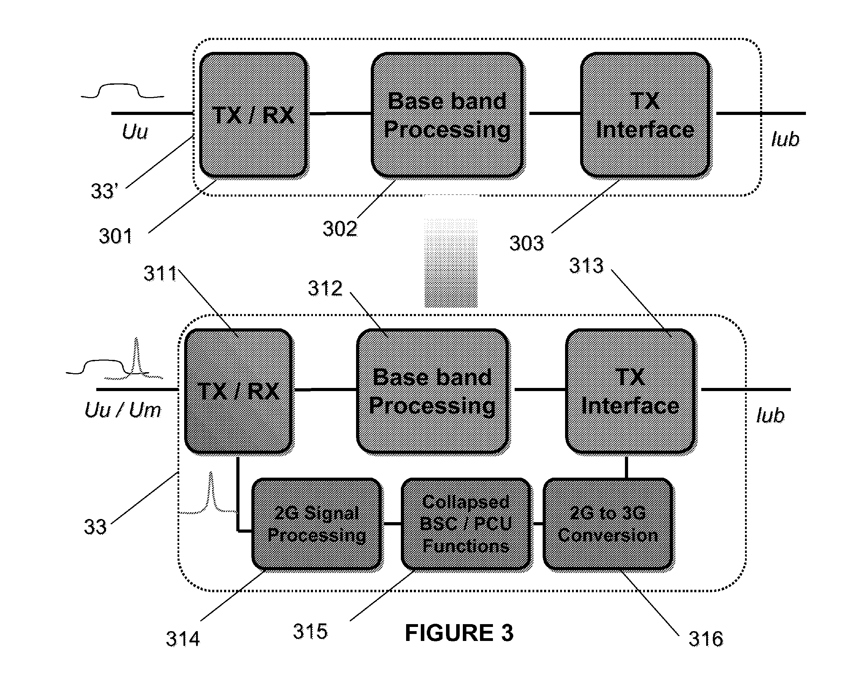

The 2G network capabilities that the node B 23 is capable of emulating are based on the technology known as Software-Defined Radio (SDR). In particular, the emulation of 2G capabilities of the inventive node B 23 takes advantage of the new generation of Single RAN equipment, which is based on SDR. This technology permits that components that have typically been implemented in hardware (e.g. mixers, filters, amplifiers, modulators/demodulators, detectors, etc.) be instead implemented using software on a personal computer or embedded computing devices. The SDR is thus the logic (in the form of cards or plug-in units) which can be programmed once they have been installed in the node B. The particular features of the node 23 are explained in detail next, in relation to figure 3.

This emulation was not possible with traditional radio equipment (traditional nodes B in 3G), because the physical features of such node B's were fixed and the transmitted radio signal had nothing to do with a GSM signal. In other words, it was unthinkable to ask a traditional node B to transmit a 2G signal or to understand a signal originated in a 2G terminal.

The terminals 21 are preferably telemetry ones, which use GPRS. They are not multistandard, but single-band. In particular, most of them work in the frequency band of 900 MHz.

As already mentioned, telemetry terminals are normally programmed to send data at a fixed moment of the day (for example, at night). Because the amount of data to be transmitted is usually small, the service does not need to be active for long time periods. Preferably, the service over the emulated 2G network is programmed to work in a time period in which the 3G/HSDPA/LTE network is not very load, in such a way that some capacity of the 3G/HSDPA/LTE network can be temporarily diverted to 2G. In particular, some or all the output power and bandwidth of Multi-Carrier Power Amplifiers (MCPA) and some or all the processor load of Base Band Processing modules can be allocated to the 2G emulated network.

For example, when 2 carriers of 5 MHz in the 900MHZ band have been allocated for 3G, one of them can be switched off and the power and bandwidth that is consequently freed is made available for the 2G emulated network. When only one carrier is used, but all the output power from the MCPA is allocated for 3G, this power can be temporarily allocated for the 2G emulated network if is not in use by 3G services. In any case, 3G services should be prioritized over 2G emulation, and if the 3G traffic load is so high that there are no free resources available for emulating the 2G network, and 3G traffic can not be handed-over to a neighbouring Node B, 2G emulation is not be activated. The operator will be able to identify through traffic counters when this situation happens, in order to assess the need of expanding the capacity of the site by adding more Power Amplifiers and/or base band processing units.

Emulation of the 2G network can activated by two different mechanisms: (1) a programmed activation, that is, a fixed activation of the 2G network emulation in the node B 23 33 at a certain time period of the day defined by the operator (e.g. from 3:00 AM to 4:00 AM); or (2) a triggered activation, when the number of RACH messages received from 2G terminals 22 at the node B 23 33 exceeds a certain threshold defined by the operator.

Figure 3 shows the modification in the modules of the network entity 33 responsible for the implementation of the present invention. In this particular embodiment, the network entity is a node B 33 of a 3G network. The modifications and functional description are explained by comparison between the standard modules 301 302 303 of a conventional node B 33' and the upgraded modules 311 312 313 314 315 316 of the inventive node B 33.

A conventional node B 33' comprises a transmitting/receiving module 301, prior to which the broadband 3G signal is detected and filtered. In the uplink, the received signal enters a base-band processing module 302, after which the base-band signal enters a transmitting interface 303, which adapts the signal to the Iub interface (towards the RNC).

The architecture of the inventive node B 33 is as follows:
Module 311 is in charge of transmitting/receiving signals. In particular, in the uplink, it receives and filters the received signals (2G or 3G signals). It has a narrowband filter (of about 200 KHz) tuned to the 2G selected working frequency for extracting a 2G signal and a broadband filter (of about 5, 10 or 15 MHz) tuned to the 3G selected working frequency for extracting a 3G signal. (Note that each 3G carrier occupies a band of 5MHz. A network operator may usually have one, two or three assigned 5 MHz-carriers, the activation of which depends on the operator's planning strategy and on its traffic demand.) If the received signal is 3G, a divider directs it to the conventional 3G base-band processing 312 and then to the transmitting interface 313. If the received signal is 2G, the divider directs it to module 314. Most of the received 2G signals belong to the band of 900 KHz, which is the band usually employed by telemetry terminals. For this reason, the node B 33 is tuned to work in the frequency band of 900 MHz. Alternatively, it can also work in other bands (such as 1800, 2100 and/or 2600 MHz), for which specific power amplifiers are required (for each frequency band). Since nodes B are only used in the 2100-band and in the 900-band, and 2G only works in the 900-band and in the 1800-band, the only common band between both technologies is the 900-band. This is therefore the only band in which an emulation of 2G over 3G makes sense.

In a particular embodiment, the network is not a 3G network, but a LTE (4G) network, and the network entity is not a node B, but an eNode. eNodes can work in any bands (900, 1800, 2100, 2600 MHz) and even in UHF or Digital Divided 800 MHz. In that case, the eNode is tuned to work either in the frequency band of 900 MHz or in the frequency band of 1800 MHz (and thus the emulation of 2G over the eNode is enabled).

In other words, due to the bandwidth limitations of the GSM terminal, the emulated 2G network can be implemented either on 3G Nodes B working in the 900MHz band or on LTE eNodes working in the 900/1800MHz band.

In the downlink, module 311 combines the 2G and the 3G signals and sends them to the transmitting antenna (not illustrated). This combination is done by a card called MCPA (*Multiple Carrier Power Amplifier*) *,* which is a technology which permits the simultaneous transmission of 2G and 3G signals. The card MCPA is already part of the Single RAN. The MCPA assigns the resources symmetrically in uplink and downlink.

Modules 314 315 and 316 are based on Software Defined Radio SDR.

The 2G signal reaches module 314, wherein it is processed. In particular, module 314 is a simplified (also called thin) implementation of a 2G BTS. In includes capabilities related to the management of the radio interface, such as modulation/demodulation, ciphering/ deciphering, burst formatting, interleaving/deinterleaving, channel coding/decoding, etc. and base band processing. These capabilities are implemented by SDR. In the uplink, it extracts user data from the 2G signals coming from the TX/RX stage 311. In the downlink, it constructs the 2G downlink signal. In summary, module 314 emulates a 2G BTS.

Next, the signal enters module 315, which implements some BSC/ PCU (*Packet Control Unit*) functions. Among the functions implemented by module 315 through SDR are radio resources management, such as initialization, basic channel allocation algorithms (in particular, complex mobility management functions are removed), 2G call setup and release processes, transmission management, power control, radio channel management and TBF (*Temporary Block Flow*) setup and release processes. In summary, module 315 emulates a 2G BSC. The term "collapsed" used in figure 3 (module 315) refers to the fact of joining, in a same network entity, several network levels. In this case, the 2G is collapsed, because the levels of BTS and BSC are joined in a network entity 33.

The output of module 315 enters module 316, responsible for the 2G to 3G conversion, which is also implemented through SDR. In the uplink, module 316 is in charge of encapsulating the user data extracted from the 2G signal at previous stages, into 3G frames that are sent to the transmitting interface 313 of the network entity 43. In the downlink, module 316 converts 3G messages coming from the core network into 2G messages.

Thanks to the emulation of the 2G BTS and BSC, the mobile terminal 22 thinks that it is using a conventional 2G network.

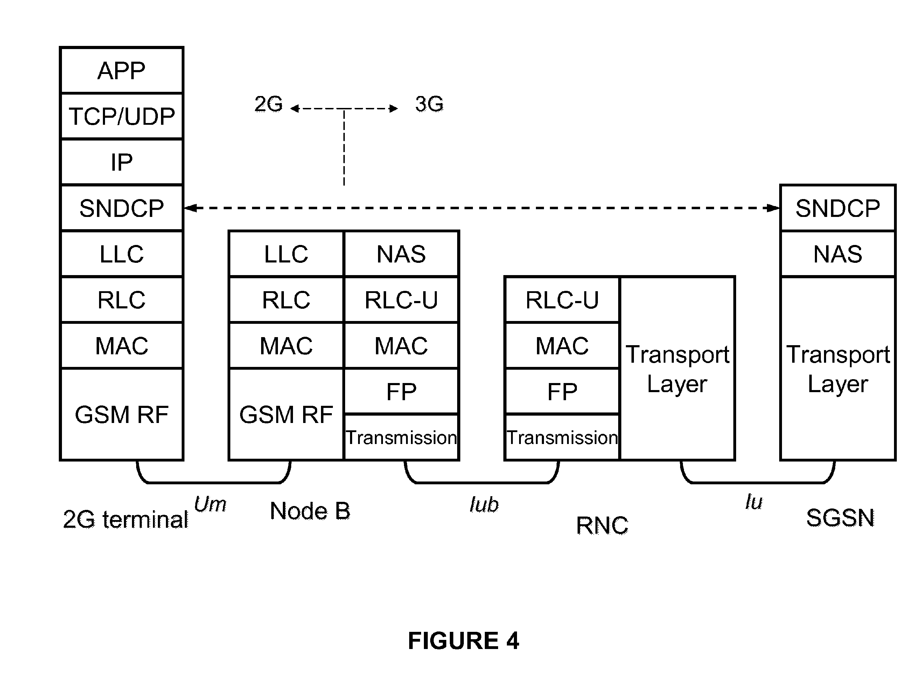

Figure 4 shows a schematic representation of the protocol stack of the network entities involved in the inventive method. The protocols which affect the 2G terminal, the RNC and the SGSN are the conventional ones. The inventive network entity, however, has a modified protocol stack. Figure 4 shows the modified protocol stack of a node B 23 33 according to the invention. In particular, this node B 23 33 implements, by means of Software Defined Radio SDR, both the protocol stack of a 2G BTS (on the left: GSM RF, MAC, RLC and LLC layers) and the protocol stack of a conventional 3G node B (on the right: transmission, FP, MAC, RLC-U and NAS layers).

In the uplink, the LLC (*Logical Link Layer*) is responsible for checking whether the uplink signal refers to a request for establishing a call, or to a request for releasing a call, or to sending payload. At the inventive node B, this information is translated into a format that a protocol of the Non-Access Stratum (NAS) of the UMTS architecture is capable of understanding.

At the RNC, the information up to the RLC-U level is extracted and encapsulated on the transport layer (according to one of possible transport protocols) to be sent to a node of the core network.

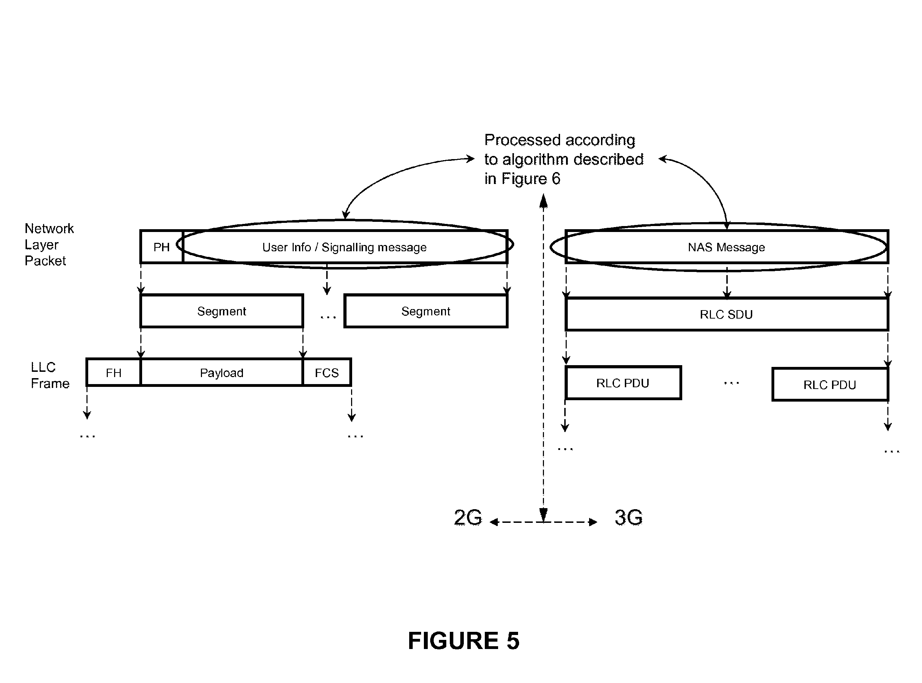

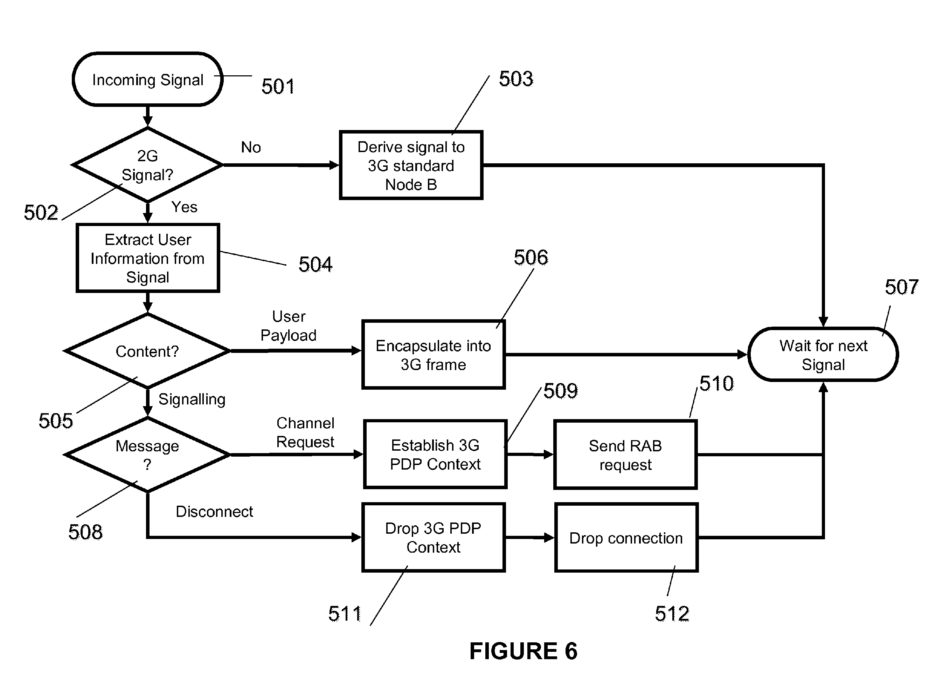

Figure 5 shows how 2G frames are converted to 3G frames and vice versa. In the uplink, module 316 in figure 3 extracts the payload of the 2G network protocol (which can be either user information or a signalling message, as illustrated in figure 5) and converts it to a NAS message following the algorithm which is described next in relation to figure 6. In the illustrated example, the 2G network protocol is the GPRS network protocol. In the downlink, it performs a symmetrical operation, converting a NAS message to a GPRS network protocol message.

Figure 6 shows a data flow of the inventive method for implementing some capabilities of a 2G network in a 3G or HSDPA or LTE network. It is implemented in a network entity of a 3G network or a HSDPA network or a LTE network. The network entity upon which the method of figure 6 is implemented is a 3G node B 23 33. In particular, figure 6 shows the algorithm in the uplink.

When an uplink incoming signal from a terminal 21 22 is detected 501 by the node B 23 33, the node B 23 33 checks 502 whether the incoming signal is a 2G signal or not. If it is not a 2G signal (that is to say, if it is a 3G, HSDPA or LTE signal), the signal is derived 503 to the standard 3G node B, where it is applied the conventional 3G capabilities. Afterwards, the algorithm waits for the arrival of a new signal 507 which triggers the beginning of the algorithm (back to step 501).

If it is a 2G signal, the user information of the signal is extracted 504 from the signal. This is carried out by module 314 of figure 3. Once the user information is extracted, it is checked 505 whether its content is user payload or signaling information. This check is done automatically and as defined in the standard: Over the physical channel some logical channels are defined: access request channel (PRACH), traffic channel (PDTCH), control channel (PACCH). For example, the mobile channel requests access through a PRACH channel, in such a way that all the information sent through that channel is signalling information for establishing a call. Once a PDTCH is assigned, all the information sent through that channel is user payload. Over the PACCH channel some pre-established messages are sent, among which a disconnection request message can be sent.

If it is signaling information, it is checked 508 whether the message comprised in the signaling information is a channel request or a disconnection request.

If it is a channel request, a 3G packet data protocol (PDP) context is established 509. This is carried out by module 316 of figure 3. Module 316 extracts a PDP context establisment message from the 2G signal and enrutes it to the GGSN through the 3G protocol stack. Note that the PDP context is established between a mobile terminal and the final data network through the GGSN. If the network is a LTE network instead of a 3G one, an equivalent context is established through the LTE protocol stack. Once the 3G PDP context 509 is established, a radio access bearer (RAB) request is sent 510. The RAB is established between the SGSN and the mobile terminal. The PDP context is defined over the RAB. In other words: a PDP context is first established, then a RAB is assigned, and finally the user information is sent through that RAB. If the request is accepted, a connection is established. The algorithm then waits for the arrival of a new signal 507 which triggers the beginning of the algorithm (back to step 501). Module 316, instead of assigning a 3G Radio Bearer to the RAB, assigns a 2G PDCH through module 315.

If it is a disconnection request (which implies that a call has previously been established as described in the previous paragraph), the 3G packet data protocol (PDP) context or equivalent LTE context is dropped 511. This is carried out by module 316 of figure 3. Once it is dropped, the call over the radio access bearer (RAB) is dropped 512. Again, the algorithm waits for the arrival of a new signal 507, which triggers the beginning of the algorithm (back to step 501).

If the content of the user information is user payload instead of signaling information, it is encapsulated 506 into a 3G frame or a LTE frame (of the already established call on a radio access bearer (RAB)). This is carried out by module 316 of figure 3. The arrival of a new signal 507 is waited for, which triggers the beginning of the algorithm (back to step 501).

In summary, a mobile terminal 22 which only works under the 2G standard (for example, a telemetry terminal which uses GPRS) tries to establish a call. The 2G network has been switched off because most of the terminals are multistandard. In the uplink, a node B 23 43 capable of emulating a 2G BTS and a 2G BSC receives the 2G signal and accepts the call. The network, which is either a 3G network or a HSDPA network or a LTE network, establishes the call. In the downlink, the node B 23 43 informs the terminal 22 which originated the call that a channel has been assigned. The terminal 22 transmits its information in the 2G protocol (the only one it understands). The node B 23 43 extracts the information from the terminal 22 and forwards it to the RNC 24 in a 3G or LTE format. When the transmission has finished, the mobile terminal 22 sends a message requesting the release of the transmission channel and the node B 23 43 releases both the 2G channel (towards the mobile terminal 22) and the 3G channel (towards the RNC 24).

In conclusion, the invention enables operators of mobile communications networks to optimize the hardware resources by switching off the 2G network even though some 2G terminals keep on using this technology.

Although an exemplary embodiment has been described illustrating a situation in which the mobile communications network is a 3G network, in which case the method is executed in a node B, the invention is applicable to other mobile communications networks, such as HSDPA, LTE or others.

The invention is obviously not limited to the specific embodiments described herein, but also encompasses any variations that may be considered by any person skilled in the art (for example, as regards the choice of components, configuration, etc.), within the general scope of the invention as defined in the appended claims.

## Claims

1. A method of establishing, maintaining or releasing a call in a 3G mobile communications network (20), wherein at least one 2G terminal (21) participates in said call, the method being **characterised by** the steps of:
- at a network entity (23, 33), checking (502) whether an incoming signal from a mobile terminal (21, 22) is a 2G signal or not and, if said signal is a 2G signal:
- extracting (504) the user information from said signal and checking (505) whether its content is user payload or signalling information, and:
- if it is signalling information, checking (508) whether it is a channel request or a disconnection request, and:
- if it is a channel request, establishing (509) a 3G packet data protocol context and requesting (510) a radio access bearer for establishing a connection to a higher level network entity (25);
- if it is a disconnection request, releasing (511) an open 3G packet data protocol context and requesting (512) the disconnection of a connection to a higher level network entity (25);
- if it is user payload, encapsulating (506) said user payload in a frame of a connection established on a radio access bearer and sending said frame to a higher level network entity (25).

2. The method according to claim 1, wherein said mobile terminal (21, 22) is a 2G terminal (21).

3. The method according to claim 2, wherein said 2G terminal (21) is a telemetry terminal.

4. The method according to claim 2, wherein said telemetry terminal (21) works in the band of 900 MHz.

5. The method according to any preceding claim, wherein said 2G signal is a GPRS signal.

6. The method according to any preceding claim, wherein said network entity (23, 33) is a node B.

7. The method according to any preceding claim, wherein said higher level network entity (25) is a SGSN.

8. The method according to claim either claim 6 or 7, wherein if said signal is a 3G signal, processing said signal at said node B.

9. A network entity (23, 33) of a mobile communications network configured for carrying out the method of any preceding claim.

10. The network entity (23, 33) according to claim 9, which comprises:
- means (311) for receiving and filtering an incoming signal, said incoming signal being either a narrow-band signal or a broad-band signal;
- means (312) for processing 3G signals; and
- means (314, 315, 316) for processing 2G signals.

11. The network entity (23, 33) according to claim 10, wherein said means (314, 315, 316) for processing 2G signals is implemented by means of software defined radio.

12. The network entity (23, 33) according to either claim 10 or 11, wherein said means (314, 315, 316) for processing 2G signals comprises:
- means (314) for emulating a 2G BTS;
- means (315) for emulating a 2G BSC;
- means (316) for converting 2G signals into 3G signals and vice versa.

13. A computer program comprising computer program code means adapted to perform the steps of the method according to any claims from 1 to 8 when said program is run on a computer, a digital signal processor, a field-programmable gate array, an application-specific integrated circuit, a micro-processor, a micro-controller, or any other form of programmable hardware.
